# EUROPÄISCHE PATENTSCHRIFT

(11) **EP 2 957 391 B1**
(45) Veröffentlichungstag und Bekanntmachung des Hinweises auf die Patenterteilung: **15.02.2017**
(21) Anmeldenummer: 15001820.8
(22) Anmeldetag: 19.06.2015
(51) Int. Cl.: B25F 5/02, B27B 17/00

(54) **HANDGEFÜHRTES ARBEITSGERÄT**
MANUALLY OPERATED WORK DEVICE
APPAREIL DE TRAVAIL PORTATIF

(30) Priorität: 20.06.2014 DE 102014009144
(43) Veröffentlichungstag der Anmeldung: 23.12.2015
(73) Patentinhaber: Andreas Stihl AG & Co. KG, 71336 Waiblingen (DE)
(72) Erfinder: KAUPP, Klaus, 70329 Stuttgart (DE)
(74) Vertreter: Reinhardt, Annette

(56) Entgegenhaltungen:
- EP-A2- 2 607 027
- DE-A1- 4 201 666
- US-A- 6 108 916
- US-A1- 2013 161 166

## Beschreibung

Die Erfindung betrifft ein handgeführtes Arbeitsgerät der im Oberbegriff des Anspruchs 1 angegebenen Gattung.

Aus der DE 10 2012 025 309 ist ein handgeführtes Arbeitsgerät bekannt, bei dem eine Sperreinrichtung für das Bedienelement zur Bedienung des Antriebsmotors vorgesehen ist. Um die Sperreinrichtung zu lösen, ist vorgesehen, dass ein Betätigungselement der Sperreinrichtung zunächst in Umfangsrichtung des Handgriffs verschwenkt und anschließend in den Handgriff gedrückt werden muss.

Der Erfindung liegt die Aufgabe zugrunde, ein handgeführtes Arbeitsgerät der gattungsgemäßen Art zu schaffen, dessen Sperreinrichtung eine vorteilhafte Gestaltung aufweist.

Diese Aufgabe wird durch ein handgeführtes Arbeitsgerät mit den Merkmalen des Anspruchs 1 gelöst.

Es ist vorgesehen, dass das Betätigungselement bei der Verstellung aus der Sperrstellung in die Freigabestellung mindestens teilweise in einer ersten Betätigungsrichtung und mindestens teilweise in einer zweiten Betätigungsrichtung bewegt werden muss, wobei die erste Betätigungsrichtung in das Gehäuseteil hinein gerichtet ist und die zweite Betätigungsrichtung senkrecht zur ersten Betätigungsrichtung verläuft. Es ist vorgesehen, dass die Zwangsführung das Betätigungselement bei einer Bewegung des Betätigungselements in der zweiten Betätigungsrichtung aus der Sperrstellung in Richtung auf die Freigabestellung zunächst in Gegenrichtung zur ersten Betätigungsrichtung bewegt, bevor das Betätigungselement in der ersten Betätigungsrichtung bewegt werden kann. Das Betätigungselement wird demnach zunächst in einer Richtung aus dem Gehäuseteil hinaus bewegt, bevor das Betätigungselement in das Gehäuseteil hinein bewegt werden kann. Die Bewegung aus dem Gehäuseteil hinaus verhindert, dass die Sperreinrichtung versehentlich in ihre Freigabestellung verstellt werden kann, wenn der Bediener den Handgriff lediglich greift.

Vorteilhaft verläuft die Bewegung des Betätigungselements aus der Sperrstellung in die Freigabestellung in einem Bogen, der sich in der ersten Betätigungsrichtung und in der zweiten Betätigungsrichtung erstreckt. Das Betätigungselement führt demnach keine geradlinige Bewegung zuerst in Gegenrichtung, dann in der zweiten Betätigungsrichtung und dann in der ersten Betätigungsrichtung durch, sondern eine bogenförmige Bewegung, die in einem ersten Bereich einen Anteil in der Gegenrichtung und einen weiteren Anteil in der zweiten Betätigungsrichtung aufweist und die in einem zweiten Bereich einen Anteil in der zweiten Betätigungsrichtung und einen weiteren Anteil in der ersten Betätigungsrichtung aufweist. Dadurch ergibt sich eine ergonomische, einfache Bedienung. Vorteilhaft bewegt der Bediener das Betätigungselement im Wesentlichen in der zweiten Betätigungsrichtung, und die Bewegung in Gegenrichtung zur ersten Betätigungsrichtung und in erster Betätigungsrichtung wird im Wesentlichen durch die Zwangsführung bewirkt. Der Bediener muss insbesondere die Bewegung in Gegenrichtung zur ersten Betätigungsrichtung durch entsprechende Dosierung der Betätigungskraft lediglich zulassen, das Betätigungselement jedoch nicht aktiv in Gegenrichtung zur Betätigungsrichtung nach außen ziehen. Dadurch wird eine einfache Bedienung erreicht.

Vorteilhaft ist der Weg, den das Betätigungselement bei der Verstellung aus der Sperrstellung in die Freigabestellung in Gegenrichtung zur ersten Betätigungsrichtung zurücklegt, höchstens so groß wie der Weg in der ersten Betätigungsrichtung. Dadurch steht das Betätigungselement in Freigabestellung höchstens so weit aus dem Gehäuseteil heraus wie in Sperrstellung. Vorteilhaft ist der Weg in der ersten Betätigungsrichtung größer als der Weg in Gegenrichtung. Insbesondere kommt das Betätigungselement in Freigabestellung in einer Gehäusevertiefung zu liegen. Vorteilhaft schließt das Betätigungselement in Freigabestellung im Wesentlichen bündig mit der Außenseite des Gehäuseteils ab. Dadurch kann das Betätigungselement bei ergonomischer Handhaltung leicht in der Freigabestellung gehalten werden.

Das Betätigungselement ist vorteilhaft an einem Handgriff des Arbeitsgeräts angeordnet, und die erste Betätigungsrichtung ist in Richtung auf die Längsmittelachse des Handgriffs gerichtet. Vorteilhaft liegt die zweite Betätigungsrichtung parallel zur Längsmittelachse des Handgriffs. Auch eine Ausrichtung der zweiten Betätigungsrichtung in Umfangsrichtung zur Längsmittelachse, insbesondere an der Außenseite des Handgriffs entlang, kann jedoch vorteilhaft sein.

Vorteilhaft ist das Betätigungselement ein an der Außenseite des Handgriffs angeordneter, sich in Richtung der Längsmittelachse des Handgriffs erstreckender Schieber. Um eine einfache Betätigung zu ermöglichen, ist vorgesehen, dass das Betätigungselement einen quer zur ersten Betätigungsrichtung angeordneten ersten Betätigungsabschnitt und einen quer zur zweiten Betätigungsrichtung angeordneten zweiten Betätigungsabschnitt besitzt. Dadurch ist sowohl die Bewegung des Betätigungselements in der ersten Betätigungsrichtung als auch die Bewegung in der zweiten Betätigungsrichtung für den Bediener einfach und ergonomisch möglich.

Eine einfache Gestaltung ergibt sich, wenn die Zwangsführung mindestens ein Schwenklager umfasst. Vorteilhaft umfasst die Zwangsführung mindestens eine Kulissenführung. Es kann jedoch auch vorgesehen sein, dass die Zwangsführung zwei Schwenklager umfasst. Auch eine Gestaltung mit zwei Kulissenführungen kann vorteilhaft sein. Vorteilhaft besitzt die Kulissenführung einen bogenförmigen Verlauf. Durch Abstimmung des Verlaufs der Kulissenführungen und/oder des Hebelarms der Schwenklager kann eine gewünschte Bewegung des Betätigungselements erreicht werden. Es kann vorteilhaft sein, dass das Betätigungselement in unterschiedlichen Längenabschnitten unterschiedlich große Bewegungen in der ersten und der zweiten Betätigungsrichtung ausführt. Dadurch kann eine ergonomische Betätigung ermöglicht werden.

Vorteilhaft besitzt die Sperreinrichtung eine Sperrkontur, die eine Betätigungsbewegung des Bedienelements in Sperrstellung des Betätigungselements verhindert und in Freigabestellung zulässt. Die Sperrkontur ist vorteilhaft beweglich gelagert und an die Stellung des Betätigungselements gekoppelt. Die Sperrkontur ist insbesondere an einem Arm eines Schwenklagers des Betätigungselements angeordnet. Dadurch ergibt sich eine einfache Gestaltung. Die Sperrkontur verhindert eine Betätigung des Bedienelements. Es kann jedoch auch vorgesehen sein, dass die Sperreinrichtung auf die Übertragung der Bedienbewegung des Bedienelements auf den Antriebsmotor wirkt und die Übertragung der Bedienbewegung verhindert. Es kann auch vorgesehen sein, dass die Sperreinrichtung elektrisch wirkt und beispielsweise eine Bedienung des Antriebsmotors sperrt, solange die Sperreinrichtung in Sperrstellung steht.

Ausführungsbeispiele der Erfindung werden im Folgenden anhand der Zeichnung erläutert. Es zeigen:
- Fig. 1: eine schematische Darstellung einer Motorsäge,
- Fig. 2: eine Seitenansicht des Handgriffs der Motorsäge aus Fig. 1, wobei eine Griffhalbschale abgenommen ist, mit der Sperreinrichtung in Sperrstellung,
- Fig. 3: den Handgriff aus Fig. 2 mit der Sperreinrichtung in einer Zwischenstellung,
- Fig. 4: den Handgriff aus den Figuren 3 und 4 mit der Sperreinrichtung in Freigabestellung,
- Fig. 5: den Handgriff mit einer Ausführungsvariante der Sperreinrichtung in Freigabestellung.

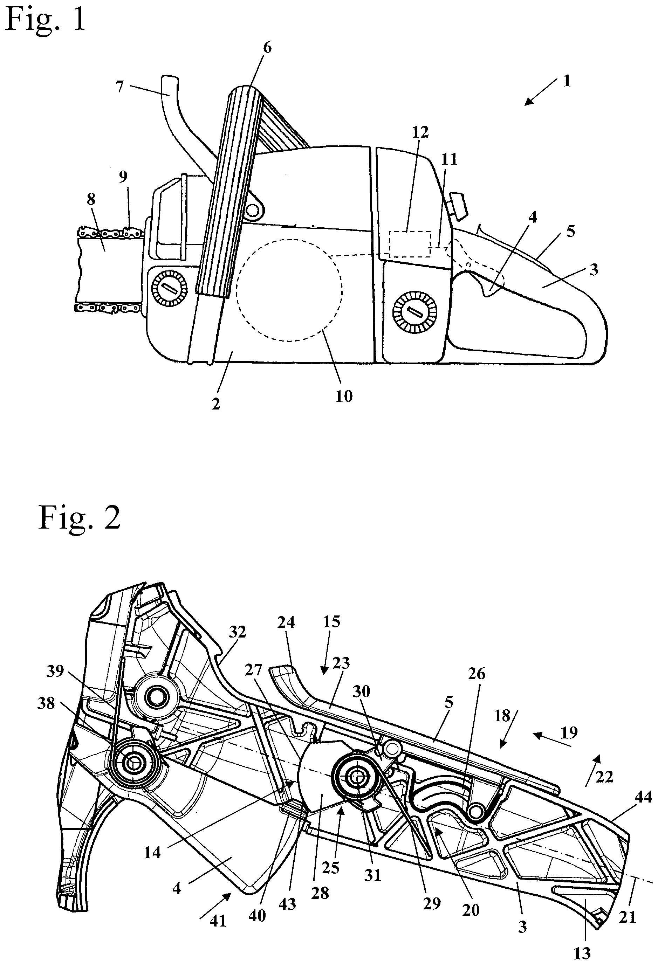

Fig. 1 zeigt als Ausführungsbeispiel für ein handgeführtes Arbeitsgerät eine Motorsäge 1. Anstatt einer Motorsäge 1 kann auch ein anderes handgeführtes Arbeitsgerät wie beispielsweise ein Trennschleifer, ein Freischneider, eine Heckenschere, ein Blasgerät oder dgl. vorgesehen sein. Die Motorsäge 1 besitzt ein Gehäuse 2, an dem ein Handgriff 3 angeordnet ist. Der Handgriff 3 ist im Ausführungsbeispiel als hinterer Handgriff ausgebildet. Der Handgriff 3 kann jedoch auch ein an der Oberseite des Gehäuses 2 angeordneter oberer Handgriff sein. Am Handgriff 3 sind ein Bedienelement 4 und ein Betätigungselement 5 angeordnet. Das Bedienelement 4 dient zur Bedienung eines im Gehäuse 2 angeordneten Antriebsmotors 10. Im Ausführungsbeispiel ist der Antriebsmotor 10 als Elektromotor ausgebildet, und das Bedienelement 4 wirkt über ein Koppelelement 11 und eine Steuereinrichtung 12 auf den Antriebsmotor 10. Der Antriebsmotor 10 kann jedoch auch ein Verbrennungsmotor sein. Das Koppelelement 11 kann dann beispielsweise auf einen Vergaser wirken, der dem Verbrennungsmotor Kraftstoff/Luft-Gemisch zuführt.

An der dem Handgriff 3 abgewandt liegenden Vorderseite des Gehäuses 2 ragt eine Führungsschiene 8 nach vorn, an der eine Sägekette 9 umlaufend angeordnet ist. Diese Sägekette 9 ist vom Antriebsmotor 10 angetrieben. Am Gehäuse 2 ist ein Griffrohr 6 gehalten, das das Gehäuse 2 übergreift. An der der Sägekette 9 zugewandten Seite des Griffrohrs 6 ist ein Handschutz 7 angeordnet. Der Handschutz 7 kann zum Auslösen einer Bremseinrichtung für die Sägekette 9 dienen.

Fig. 2 zeigt den Aufbau des Handgriffs 3 im Einzelnen. Der Handgriff 3 ist aus zwei Halbschalen 13 aufgebaut, von denen in Fig. 2 eine gezeigt ist. Die oberhalb der Blattebene liegende Halbschale 13 ist abgenommen, so dass die Lagerung der Elemente im Handgriff 3 sichtbar ist. Das Bedienelement 4 ist um eine Schwenkachse 38 schwenkbar im Handgriff 3 gelagert. Das Bedienelement 4 ist in die in Fig. 2 gezeigte, unbetätigte Stellung von einer Feder 39 federbeaufschlagt, die im Ausführungsbeispiel als Schenkelfeder ausgebildet ist. Zum Betätigen des Bedienelements 4 muss das Bedienelement 4 in einer Betätigungsrichtung 41 entgegen der Kraft der Feder 39 in den Handgriff 3 gedrückt werden.

Wie Fig. 2 zeigt, ist eine Sperreinrichtung 14 für das Bedienelement 4 vorgesehen. In Fig. 2 ist die Sperreinrichtung 14 in einer Sperrstellung 15 gezeigt. In Sperrstellung 15 kann das Bedienelement 4 nicht in Betätigungsrichtung 41 verschwenkt werden, da eine Sperrkontur 27 der Sperreinrichtung 14 im Schwenkweg des Bedienelements 4 liegt. Wie Fig. 2 zeigt, liegt das Bedienelement 4 mit einem Anschlag 43 an der Sperrkontur 27 an. Benachbart zum Anschlag 43 ist ein Anschlag 40 vorgesehen, der mit dem Gehäuse des Handgriffs 3 zusammenwirkt und verhindert, dass die Feder 39 das Bedienelement 4 weiter aus dem Handgriff 3 drücken kann als in Fig. 2 gezeigt.

Die Sperrkontur 27 ist an einem Arm 28 eines Schwenkhebels 30 ausgebildet. Der Schwenkhebel 30 ist Teil eines Schwenklagers 25, mit dem das Betätigungselement 5 am Handgriff 3 gelagert ist. Das Betätigungselement 5 ist als Schieber ausgebildet und benachbart zu einer Außenseite 44 des Handgriffs 3 angeordnet. Das Betätigungselement 5 ist mit dem Schwenklager 25 und einer Kulissenführung 26 am Handgriff 3 beweglich gelagert. Die Kulissenführung 26 und das Schwenklager 25 bilden eine Zwangsführung für das Betätigungselement 5. Die Kulissenführung 26 ist bogenförmig ausgebildet. Das Schwenklager 25 und die Kulissenführung 26 sind so ausgerichtet, dass sich das Betätigungselement 5 bei einer Bewegung in einer zweiten Betätigungsrichtung 19 zunächst in einer Gegenrichtung 22 aus dem Handgriff hinaus bewegt, bevor das Betätigungselement 5 in einer ersten Betätigungsrichtung 18 in Richtung auf den Handgriff 3 bewegt werden kann. Die erste Betätigungsrichtung 18 ist dabei in den Handgriff 3 hinein gerichtet. Der Handgriff 3 besitzt eine Längsmittelachse 21, und die erste Betätigungsrichtung 18 ist etwa in radialer Richtung auf die Längsmittelachse 21 zu ausgerichtet. Die Gegenrichtung 22 verläuft aus dem Handgriff 3 hinaus. Die zweite Betätigungsrichtung 19 verläuft in Längsrichtung des Handgriffs 3 und näherungsweise parallel zu einer Längsmittelachse 21 des Handgriffs 3. Im Ausführungsbeispiel ist die zweite Betätigungsrichtung 19 dabei in Richtung auf das Gehäuse 2 (Fig. 1) der Motorsäge 1 gerichtet. Vom Bediener aus gesehen ist das Betätigungselement 5 in zweiter Betätigungsrichtung 19 nach vorne und, aufgrund der Schrägstellung der Längsmittelachse 21, nach oben zu schieben. Die zweite Betätigungsrichtung 19 kann jedoch auch in Betriebsposition etwa horizontal oder nach unten gerichtet sein. Auch eine Ausrichtung der zweiten Betätigungsrichtung 19 in Umfangsrichtung des Handgriffs 3 kann vorteilhaft sein.

Wie Fig. 2 auch zeigt, besitzt das Betätigungselement 5 einen ersten Betätigungsabschnitt 23, der etwa parallel zur Außenseite 44 des Handgriffs 3 und quer, im Ausführungsbeispiel etwa senkrecht zur ersten Betätigungsrichtung 18 verläuft. Das Betätigungselement 5 besitzt außerdem einen zweiten Betätigungsabschnitt 24, der an der dem Gehäuse 2 zugewandten, entgegen der zweiten Betätigungsrichtung 19 liegenden Seite des Betätigungselements 5 angeordnet ist und der quer zur zweiten Betätigungsrichtung 19 verläuft. Im Ausführungsbeispiel ist der zweite Betätigungsabschnitt 24 als nach oben gebogener, vorderer Rand des Betätigungselements 5 ausgebildet. Benachbart zum Betätigungselement 5 besitzt der Handgriff 3 eine Vertiefung 32, die im Folgenden noch näher beschrieben wird.

Wie Fig. 2 zeigt, ist der Schwenkhebel 30 des Schwenklagers 25 um eine Schwenkachse 31 schwenkbar gelagert. Der Schwenkhebel 30 ist von einer Feder 29, die im Ausführungsbeispiel als Schenkelfeder ausgebildet ist, in Richtung auf die Position vorgespannt, die der Sperrstellung 15 des Betätigungselements 5 entspricht.

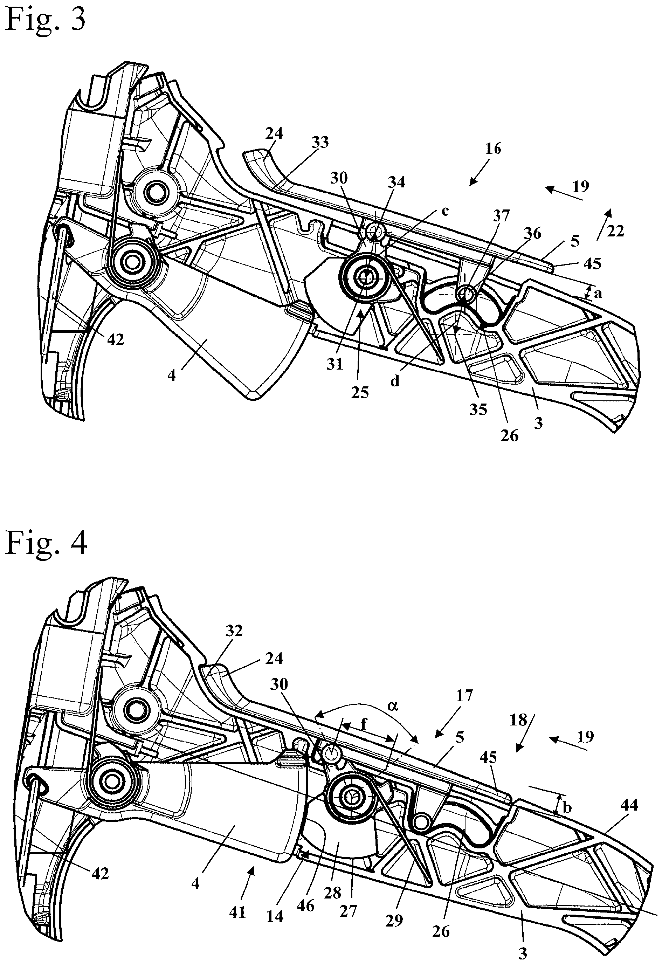

Fig. 3 zeigt die Gestaltung des Schwenklagers 25 und der Kulissenführung 26 im Einzelnen. Das Betätigungselement 5 wurde dabei gegenüber der in Fig. 2 gezeigten Sperrstellung 15 in eine Zwischenstellung 16 verstellt. Hierzu wurde das Betätigungselement 5 in der zweiten Betätigungsrichtung 19 bewegt. Aufgrund der Zwangsführung durch das Schwenklager 25 und die Kulissenführung 26 hat sich das Betätigungselement 5 bei der Bewegung in der zweiten Betätigungsrichtung 19 gleichzeitig in Gegenrichtung 22 zur ersten Betätigungsrichtung 18 vom Handgriff 3 weg nach außen bewegt. Das Betätigungselement 5 hat sich dabei um einen Weg a in Gegenrichtung 22 bewegt. Der Weg a ist an einem Bereich 45 des Betätigungselements 5 gemessen, der der dem zweiten Betätigungsabschnitt 24 entfernt liegende Bereich des Betätigungselements 5 ist.

Wie Fig. 3 zeigt, ist das Betätigungselement 5 um eine Schwenkachse 34 schwenkbar am Schwenkhebel 30 gelagert. Die Schwenkachse 34 besitzt zur Schwenkachse 31 des Schwenkhebels 30 einen Abstand c. In der Kulissenführung 26 ist ein Führungsbolzen 36 des Betätigungselements 5 geführt. Der Führungsbolzen 36 besitzt eine Mittelachse 37.

Die Kulissenführung 26 ist als Kreisbogenabschnitt ausgebildet und besitzt einen Mittelpunkt 35, der zur Mittelachse 37 einen Abstand d aufweist. Der Abstand d ist im Ausführungsbeispiel kleiner als der Abstand c. Dadurch bewegt sich ein Bereich 33 des Betätigungselements 5, der dem Bereich 45 entfernt liegt, um einen geringeren Weg in Gegenrichtung 22 als der Bereich 45 des Betätigungselements 5. Der Bereich 33 ist im Ausführungsbeispiel der bezogen auf den Bediener nach vorne ausgerichtete Bereich, und der Bereich 45 ist der nach hinten weisende Bereich des Betätigungselements 5. Wie Fig. 3 auch zeigt, ist am Bedienelement 4 ein Gasgestänge 42 zur Bedienung des Antriebsmotors 10 vorgesehen. Anstatt eines Gasgestänges 42 kann insbesondere dann, wenn der Antriebsmotor ein Elektromotor ist, auch ein elektrischer Schalter vorgesehen sein, auf den das Bedienelement 4 wirkt. Auch ein Bowdenzug oder dgl. kann vorgesehen sein.

Fig. 4 zeigt die Sperreinrichtung 14 in ihrer Freigabestellung 17. In Freigabestellung 17 ist die Sperrkontur 27 aus dem Schwenkweg des Bedienelements 4 verschwenkt, so dass das Bedienelement 4 in Betätigungsrichtung 41 in den Handgriff 3 gedrückt werden kann. Fig. 4 zeigt das Bedienelement 4 in vollständig betätigter Stellung, also in Vollgasstellung. Das Bedienelement 4 hat das Gasgestänge 42 verschoben und dadurch den Antriebsmotor 10 betätigt. Gegenüber der in Fig. 3 gezeigten Zwischenstellung hat sich das Betätigungselement 5 weiter in der zweiten Betätigungsrichtung 19 und gleichzeitig in der ersten Betätigungsrichtung 18 in Richtung in den Handgriff 3 hinein bewegt. In der in Fig. 4 gezeigten Freigabestellung 17 liegt das Betätigungselement 5 teilweise in der Vertiefung 32. Der Bereich 45 schließt etwa eben mit der Außenseite 44 des Handgriffs 3 ab. Gegenüber der in Fig. 3 gezeigten Zwischenstellung 16 hat sich das Betätigungselement 5 im Bereich 45 um einen Weg b in der zweiten Betätigungsrichtung 19 bewegt, der mindestens dem Weg a in Gegenrichtung 22 entspricht. Im Ausführungsbeispiel ist der Weg b in die Vertiefung 32 im Bereich 45 größer als der Weg a. Wie Fig. 4 auch zeigt, ist der Schwenkhebel 30 gegenüber der Sperrstellung 15 (Fig. 2) um einen Winkel α um die Schwenkachse 31 verschwenkt, der vorteilhaft von etwa 45° bis etwa 135°, insbesondere von etwa 60° bis etwa 120° beträgt. Im Ausführungsbeispiel beträgt der Winkel α etwas weniger als 90°. Der Schwenkhebel 30 ist dabei so ausgerichtet, dass die Schwenkachse 34 sich etwa bis zum Erreichen des halben Schwenkwegs in Gegenrichtung 22 und nach Überwinden des etwa halben Schwenkwegs in erster Betätigungsrichtung 18 bewegt. Durch diese Ausrichtung des Schwenkhebels 30 ist auch sichergestellt, dass der Weg f, den das Betätigungselement 5 in der zweiten Betätigungsrichtung 19 ausführt, deutlich größer als der Weg b ist, den das Betätigungselement 5 in der ersten Betätigungsrichtung 18 ausführt. In Fig. 4 ist der Weg f eingezeichnet, um den sich das Betätigungselement 5 in der zweiten Betätigungsrichtung 19 bewegt. Wird das Betätigungselement 5 aus der in Fig. 4 gezeigten Freigabestellung 17 losgelassen, so drückt die Feder 29 das Betätigungselement 5 in Richtung auf die Sperrstellung 15 (Fig. 2). Das Betätigungselement 5 kann jedoch nicht zurückschwenken, da das Bedienelement 4 an einer Haltekontur 46 des Schwenkhebels 30 anliegt. Im Ausführungsbeispiel ist die Haltekontur 46 am Arm 28 benachbart zur Sperrkontur 27 ausgebildet. Sobald das Bedienelement 4 vom Bediener losgelassen wird und in die unbetätigte Stellung zurückschwenkt, bewegt sich das Betätigungselement 5 zurück in die Sperrstellung 15, sofern es vom Bediener nicht gehalten wird.

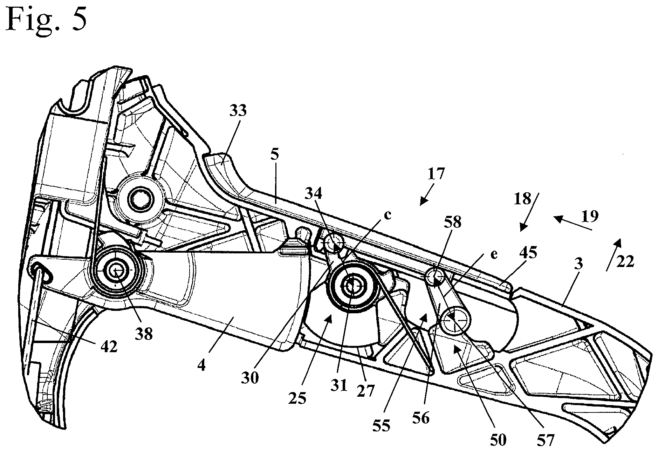

Fig. 5 zeigt ein Ausführungsbeispiel einer Zwangsführung 50 für das Betätigungselement 5. Gleiche Bezugszeichen kennzeichnen entsprechende Elemente wie in den vorangegangenen Figuren. Das Betätigungselement 5 ist mit einem ersten Schwenklager 25 und einem zweiten Schwenklager 55 gelagert, die eine bogenförmige Bewegung des Betätigungselements 5 bewirken. Das Betätigungselement 5 bewegt sich dabei bei der Bewegung aus der Sperrstellung 15 in die Freigabestellung 17 zunächst in Gegenrichtung 22 und in der zweiten Betätigungsrichtung 19 und anschließend in der ersten Betätigungsrichtung 18 und in der zweiten Betätigungsrichtung 19. Die Bewegung verläuft dabei bogenförmig. Das zweite Schwenklager 55 ist anstatt der Kulissenführung 26 der Zwangsführung 20 vorgesehen. Das zweite Schwenklager 55 besitzt einen Schwenkhebel 56, der um eine Schwenkachse 57 am Handgriff 3 schwenkbar gelagert ist. Am Betätigungselement 5 ist der Schwenkhebel 56 um eine Schwenkachse 58 gelagert. Die Schwenkachsen 57 und 58 besitzt einen Abstand e zueinander. Im Ausführungsbeispiel ist der Abstand e gleich groß wie der Abstand c der Schwenkachsen 31 und 34 des Schwenklagers 25. Dadurch führt das Betätigungselement 5 in seinen Bereichen 33 und 45 die gleiche bogenförmige Bewegung aus. Die beiden Schwenkhebel 30 und 56 sind parallel zueinander ausgerichtet. Es kann auch vorgesehen sein, Schwenkhebel mit unterschiedlicher Länge vorzusehen, die nicht parallel zueinander ausgerichtet sind, um unterschiedliche Bewegungen in den Bereichen 33 und 45 zu erzielen.

## Patentansprüche

1. Handgeführtes Arbeitsgerät mit einem Antriebsmotor (10) zum Antrieb mindestens eines Werkzeugs, mit einem Bedienelement (4) zur Bedienung des Antriebsmotors (10) und mit einer Sperreinrichtung (14) für das Bedienelement (4), wobei die Sperreinrichtung (14) ein Betätigungselement (5) besitzt, das eine Sperrstellung (15) und eine Freigabestellung (17) aufweist, wobei das Bedienelement (4) zur Bedienung des Antriebsmotors (10) gesperrt ist, wenn sich das Betätigungselement (5) in seiner Sperrstellung (15) befindet, wobei eine Zwangsführung (20, 50) für die Verstellung des Betätigungselements (5) aus der Sperrstellung (15) in die Freigabestellung (17) vorgesehen ist, wobei das Betätigungselement (5) an einem Gehäuseteil des Arbeitsgeräts angeordnet ist und bei der Verstellung aus der Sperrstellung (15) in die Freigabestellung (17) mindestens teilweise in einer ersten Betätigungsrichtung (18) und mindestens teilweise in einer zweiten Betätigungsrichtung (19) bewegt werden muss, wobei die erste Betätigungsrichtung (18) in das Gehäuseteil hinein gerichtet ist und die zweite Betätigungsrichtung (19) senkrecht zur ersten Betätigungsrichtung (18) verläuft,
**dadurch gekennzeichnet, dass** die Zwangsführung (20, 50) das Betätigungselement (5) bei einer Bewegung des Betätigungselements (5) in der zweiten Betätigungsrichtung (19) aus der Sperrstellung (15) in Richtung auf die Freigabestellung (17) zunächst in Gegenrichtung (22) zur ersten Betätigungsrichtung (18) bewegt, bevor das Betätigungselement (5) in der ersten Betätigungsrichtung (18) bewegt werden kann.

2. Arbeitsgerät nach Anspruch 1,
**dadurch gekennzeichnet, dass** die Bewegung des Betätigungselements (5) aus der Sperrstellung (15) in die Freigabestellung (17) in einem Bogen verläuft, der sich in der ersten Betätigungsrichtung (18) und in der zweiten Betätigungsrichtung (19) erstreckt.

3. Arbeitsgerät nach Anspruch 1 oder 2,
**dadurch gekennzeichnet, dass** der Weg (a), den das Betätigungselement (5) bei der Verstellung aus der Sperrstellung (15) in die Freigabestellung (17) in Gegenrichtung (22) zur ersten Betätigungsrichtung (18) zurücklegt, höchstens so groß wie der Weg (b) in der ersten Betätigungsrichtung (18) ist.

4. Arbeitsgerät nach einem der Ansprüche 1 bis 3,
**dadurch gekennzeichnet, dass** das Betätigungselement (5) an einem Handgriff (3) des Arbeitsgeräts angeordnet ist, und dass die erste Betätigungsrichtung (18) in Richtung auf die Längsmittelachse (21) des Handgriffs (3) gerichtet ist.

5. Arbeitsgerät nach Anspruch 4,
**dadurch gekennzeichnet, dass** die zweite Betätigungsrichtung (19) parallel zur Längsmittelachse (21) des Handgriffs (3) liegt.

6. Arbeitsgerät nach Anspruch 4 oder 5,
**dadurch gekennzeichnet, dass** das Betätigungselement (5) ein an der Außenseite des Handgriffs (3) angeordneter, sich in Richtung der Längsmittelachse (21) des Handgriffs (3) erstreckender Schieber ist.

7. Arbeitsgerät nach einem der Ansprüche 1 bis 6,
**dadurch gekennzeichnet, dass** das Betätigungselement (5) einen quer zur ersten Betätigungsrichtung (18) angeordneten ersten Betätigungsabschnitt (23) und einen
quer zur zweiten Betätigungsrichtung (19) angeordneten zweiten Betätigungsabschnitt (24) besitzt.

8. Arbeitsgerät nach einem der Ansprüche 1 bis 7,
**dadurch gekennzeichnet, dass** die Zwangsführung (20) mindestens ein Schwenklager (25, 55) umfasst.

9. Arbeitsgerät nach einem der Ansprüche 1 bis 8,
**dadurch gekennzeichnet, dass** die Zwangsführung (20) mindestens eine Kulissenführung (26) umfasst.

10. Arbeitsgerät nach Anspruch 9,
**dadurch gekennzeichnet, dass** die Kulissenführung (26) einen bogenförmigen Verlauf besitzt.

11. Arbeitsgerät nach einem der Ansprüche 1 bis 10,
**dadurch gekennzeichnet, dass** die Sperreinrichtung (14) eine Sperrkontur (27) umfasst, die eine Betätigungsbewegung des Bedienelements (4) in Sperrstellung (15) des Betätigungselements (5) verhindert und in Freigabestellung (17) zulässt.

12. Arbeitsgerät nach Anspruch 11,
**dadurch gekennzeichnet, dass** die Sperrkontur (27) beweglich gelagert und an die Stellung des Betätigungselements (5) gekoppelt ist.

13. Arbeitsgerät nach Anspruch 12,
**dadurch gekennzeichnet, dass** die Sperrkontur (27) an einem Arm (28) eines Schwenklagers (25) des Betätigungselements (5) angeordnet ist.

## Claims

1. Hand-guided working implement, comprising a drive motor (10) for driving at least one tool, a control (4) for operating the drive motor (10) and a locking device (14) for the control (4), wherein the locking device (14) has an actuating element (5) with a locking position (15) and a release position (17), wherein the control (4) is locked for operating the drive motor (10) if the actuating element (5) is in its locking position (15), wherein a positive guide (20, 50) is provided for moving the actuating element (5) from the locking position (15) into the release position (17), wherein the actuating element (5) is located on a housing part of the working implement and, when being moved from the locking position (15) into the release position (17), has to be moved at least partially in a first actuating direction (18) and at least partially in a second actuating direction (19), wherein the first actuating direction (18) is oriented into the housing part and the second actuating direction (19) is perpendicular to the first actuating direction (18), **characterised in that** the positive guide (20, 50) moves the actuating element (5), when the actuating element (5) is moved in the second actuating direction (19) from the locking position (15) towards the release position (17), initially in the opposite direction (22) to the first actuating direction (18) before the actuating element (5) can be moved in the first actuating direction (18).

2. Working implement according to claim 1,
**characterised in that** the actuating element (5) moves from the locking position (15) into the release position (17) in an arc extending in the first actuating direction (18) and in the second actuating direction (19).

3. Working implement according to claim 1 or 2,
**characterised in that** the distance (a) covered by the actuating element (5) in the opposite direction (22) to the first actuating direction (18) when moving from the locking position (15) into the release position (17) is no longer than the distance (b) in the first actuating direction (18).

4. Working implement according to any of claims 1 to 3,
**characterised in that** the actuating element (5) is located on a handle (3) of the working implement, and **in that** the first actuating direction (18) is oriented towards the longitudinal central axis (21) of the handle (3).

5. Working implement according to claim 4,
**characterised in that** the second actuating direction (19) is parallel to the longitudinal central axis (21) of the handle (3).

6. Working implement according to claim 4 or 5,
**characterised in that** the actuating element (5) is a slide located on the outside of the handle (3) and extending in the direction of the longitudinal central axis (21) of the handle (3).

7. Working implement according to any of claims 1 to 6,
**characterised in that** the actuating element (5) has a first actuating section (23) arranged perpendicular to the first actuating direction (18) and a second actuating section (24) arranged perpendicular to the second actuating direction (19).

8. Working implement according to any of claims 1 to 7,
**characterised in that** the positive guide (20) comprises at least one swivel bearing (25, 55).

9. Working implement according to any of claims 1 to 8,
**characterised in that** the positive guide (20) comprises at least one gate (26).

10. Working implement according to claim 9,
**characterised in that** the gate (26) has an arcuate shape.

11. Working implement according to any of claims 1 to 10,
**characterised in that** the locking device (14) comprises a locking contour (27), which prevents an actuating movement of the control (4) in the locking position (15) of the actuating element (5) while enabling it in the release position (17).

12. Working implement according to claim 11,
**characterised in that** the locking contour (27) is mounted movably and coupled to the position of the actuating element (5).

13. Working implement according to claim 12,
**characterised in that** the locking contour (27) is located on an arm (28) of a swivel bearing (25) of the actuating element (5).

## Revendications

1. Instrument de travail portatif avec un moteur d'entraînement (10) pour entraîner au moins un outil, un élément de commande (4) pour commander le moteur d'entraînement (10), et un dispositif de blocage (14) pour l'élément de commande (4), le dispositif de blocage (14) comportant un élément d'actionnement (5) qui présente une position de blocage (15) et une position de déblocage (17), l'élément de commande (4) pour commander le moteur d'entraînement (10) étant bloqué si l'élément d'actionnement (5) se trouve dans sa position de blocage (15), un guidage forcé (20, 50) étant prévu pour le passage de l'élément d'actionnement (5) de la position de blocage (15) à la position de déblocage (17), l'élément d'actionnement (5) étant disposé sur une partie de boîtier de l'instrument de travail et devant être déplacé, lors de son passage de la position bloquée (15) à la position débloquée (17), au moins en partie dans un premier sens d'actionnement (18) et au moins en partie dans un second sens d'actionnement (19), le premier sens d'actionnement (18) étant dirigé vers l'intérieur de la partie de boîtier tandis que le second sens d'actionnement (19) est perpendiculaire au premier sens d'actionnement (18), **caractérisé en ce que** le guidage forcé (20, 50), lors d'un déplacement de l'élément d'actionnement (5) dans le second sens d'actionnement (19), à partir de la position de blocage (15) en direction de la position de déblocage (17), déplace ledit élément d'actionnement (5) tout d'abord en sens inverse (22) par rapport au premier sens d'actionnement (18), avant que l'élément d'actionnement (5) puisse être déplacé dans le premier sens d'actionnement (18).

2. Instrument de travail selon la revendication 1,
**caractérisé en ce que** le déplacement de l'élément d'actionnement (5) de la position de blocage (15) jusqu'à la position de déblocage (17) suit une courbe qui s'étend dans le premier sens d'actionnement (18) et dans le second sens d'actionnement (19).

3. Instrument de travail selon la revendication 1 ou 2,
**caractérisé en ce que** la course (a) que décrit l'élément d'actionnement (5) lorsqu'il passe de la position de blocage (15) à la position de déblocage (17) en sens inverse (22) par rapport au premier sens d'actionnement (18) est au maximum aussi grande que la course (b) dans le premier sens d'actionnement (18).

4. Instrument de travail selon l'une des revendications 1 à 3,
**caractérisé en ce que** l'élément d'actionnement (5) est disposé sur une poignée (3) de l'instrument de travail, et **en ce que** le premier sens d'actionnement (18) est dirigé en direction de l'axe longitudinal médian (21) de la poignée (3).

5. Instrument de travail selon la revendication 4,
**caractérisé en ce que** le second sens d'actionnement (19) est parallèle à l'axe longitudinal médian (21) de la poignée (3).

6. Instrument de travail selon la revendication 4 ou 5,
**caractérisé en ce que** l'élément d'actionnement (5) est constitué par un élément coulissant qui est disposé sur le côté extérieur de la poignée (3) et qui s'étend dans le sens de l'axe longitudinal médian (21) de la poignée (3).

7. Instrument de travail selon l'une des revendications 1 à 6,
**caractérisé en ce que** l'élément d'actionnement (5) comporte une première section d'actionnement (23) disposée transversalement par rapport au premier sens d'actionnement (18), et une seconde section d'actionnement (24) disposée transversalement par rapport au second sens d'actionnement (19).

8. Instrument de travail selon l'une des revendications 1 à 7,
**caractérisé en ce que** le guidage forcé (20) comprend au moins un palier de pivotement (25, 55).

9. Instrument de travail selon l'une des revendications 1 à 8,
**caractérisé en ce que** le guidage forcé (20) comprend au moins un guide à coulisse (26).

10. Instrument de travail selon la revendication 9,
**caractérisé en ce que** le guide à coulisse (26) présente un tracé courbe.

11. Instrument de travail selon l'une des revendications 1 à 10,
**caractérisé en ce que** le dispositif de blocage (14) comprend un contour de blocage (27) qui empêche un déplacement d'actionnement de l'élément de commande (4), dans la position de blocage (15) de l'élément d'actionnement (5), et qui l'autorise, dans la position de déblocage (17).

12. Instrument de travail selon la revendication 11,
**caractérisé en ce que** le contour de blocage (27) est monté mobile et est accouplé à la position de l'élément d'actionnement (5).

13. Instrument de travail selon la revendication 12,
**caractérisé en ce que** le contour de blocage (27) est disposé sur un bras (28) d'un palier de pivotement (25) de l'élément d'actionnement (5).
